(19) Europäisches Patentamt

European Patent Office

Office européen des brevets

(11) Publication number: **0 270 697 B1**

# EUROPEAN PATENT SPECIFICATION

(45) Date of publication of patent specification: **03.04.91**   (51) Int. Cl.⁵: **B26D 7/01**, B26D 7/30

(21) Application number: **86116970.4**

(22) Date of filing: **06.12.86**

(54) **Apparatus for the cutting of meat or fish.**

(43) Date of publication of application:
**15.06.88 Bulletin 88/24**

(45) Publication of the grant of the patent:
**03.04.91 Bulletin 91/14**

(84) Designated Contracting States:
**CH FR GB LI SE**

(56) References cited:
**DE-A- 2 735 918**
**GB-A- 2 149 650**
**US-A- 2 541 046**

(73) Proprietor: **FRISCO-FINDUS AG**
**Industriestrasse**
**CH-9400 Rorschach(CH)**

(72) Inventor: **Akesson, Yngve Reinhold**
**37, Bankogardsgatan**
**Hälsingborg(SE)**

Rank Xerox (UK) Business Services

## Description

The present invention relates to an apparatus and a process for the automatic cutting of meat or fish to produce portions of a predetermined constant weight.

In the production of packaged frozen meat or fish products, it is important that the weight of the portions is controlled as accurately as possible, otherwise the weights will vary at the time of filling the packages resulting in certain disadvantages : underweight portions of incorrect weight have to be rejected leading to significant losses of fish or meat material while overweight portions have to be adjusted to the correct weight, which increases the costs.

The most reliable way of ensuring a constant weight is by cutting and weighing the portions manually. However, this is labour intensive and very time-consuming. Mechanical means for automatic and semi-automatic cutting and weighing of portions have been described but these generally involve the use of very complex, expensive machinery. For example, the use of photoelectric sensors has been proposed to detect the linear measurements of fish but since not only the length, but also the breadth and thickness vary appreciably, this method would not lead to the cutting of portions with an accurate constant weight. GB-A-2149650 describes an apparatus for cutting a product into portions of a preselected weight which makes use of optical sensors for measuring the area of the product. This document is the basis of the preambles of claims 1 and 8.

In our co-pending European Patent Application No. 86102704.3 (EP-A-0235322) we have described and claimed an apparatus and process for the automatic cutting of meat or fish material to produce portions of a predetermined constant weight, comprising a pair of adjacent parallel conveyors suitable for transporting a meat or fish material lying partly on each conveyor, a weighing machine and a movable cutting device characterised in that the parallel conveyors are adapted to travel in the same direction at substantially the same speed and that at least part of one of the parallel conveyors is adapted to form the load-bearing platform of the weighing machine, the weighing machine being adapted to weigh the material on the load-bearing platform and the cutting device being adapted to move transversely relative to the direction of movement of the conveyors, the direction and distance of the transverse movement being controlled by the weight recorded on the weighing machine, and then to cut the material parallel to the direction of movement.

This method is very reliable provided that the thickness of the meat or fish material does not vary too much. However, when there are wide variations in the thickness of the meat or fish pieces, it is rather difficult to maintain a constant weight.

We have now developed an improvement to this apparatus and method which, surprisingly, enables fish and meat pieces having widely varying thicknesses to be cut automatically to a predetermined constant weight.

Accordingly, the present invention provides an apparatus for the automatic cutting of meat or fish material to produce portions of a predetermined constant weight which comprises a conveyor means adapted to carry the meat or fish material, a weighing machine, a control device, and a cutting device characterised in that the conveyor means comprises a pair of adjacent parallel conveyors adapted to travel longitudinally in the same direction and at substantially the same speed and that one of the pair of adjacent parallel conveyors is adapted to form the load-bearing platform of the weighing machine, there being provided means for feeding the weight measurement to the control device, the cutting device being positioned downstream of the weighing machine and, positioned between the weighing machine and the cutting device, there is provided means for causing the material to move transversely relative to the longitudinal direction of movement, and the cutting device being adapted to cut the material parallel to the longitudinal direction of movement of the conveyors.

The parallel conveyors conveniently comprise endless belts. The parallel conveyor which is adapted to form the load-bearing platform of the weighing machine is conveniently fixed to the weighing machine via the axles of the rollers.

The means for causing the material to move transversely relative to the longitudinal direction of movement may be a conveyor adapted to travel longitudinally and also adapted to move transversely relative to the longitudinal direction of movement. The conveyor adapted to move transversely, may conveniently be provided by a single endless conveyor belt capable of travelling longitudinally but also provided with means to move transversely in either direction, which may be actuated by a step-motor.

The adjacent parallel conveyors are preferably separated by a short distance so that there is a gap between them. The presence of this gap helps to eliminate the weight influence caused by any vertical or horizontal change of distance, or any speed difference between the two conveyors. The product has a natural elasticity and the elastic zone of the product in the gap between the two conveyors helps to eliminate this weight influence. Generally, the width of the gap may conveniently be from about 20 to 70 mm, more usually from 25 to 60 mm, preferably from 30 to 55 mm and especially from 35 to 51 mm. The optimum width of the gap depends a great deal on how precisely the mechanical construction of the weighing system has been effected and, clearly, a very precisely manufactured unit will be able to record a more accurate weight with a narrow gap than with a wide gap between the conveyors.

The weighing machine is conveniently of the type consisting of continuously working scales based on load cells, or it may be a spring balance. We have found, surprisingly, that the weighing machine gives a reliable reading of the weight of that part of the meat or fish material on the load-bearing platform. Based on the weight recorded and fed to the control device which may be a computer, the means for causing the meat or fish material to move transversely e.g. a conveyor, is actuated so that the meat or fish material travels an appropriate distance in the direction required so that it is in a more suitable position for cutting the desired weight. Advantageously, one or more further weighing machines may be positioned successively upstream in association with one or more further pairs of adjacent parallel conveyors one or both of each pair being adapted to form the load-bearing platform of any such further weighing machines. In this case, there may be one or more further means, e.g. conveyors, for causing the meat or fish material to move transversely to the longitudinal direction of movement, positioned between any two successive weighing machines. The advantage of more than one weighing machine is that any subsequent weighing machine acts as a check and enables the meat or fish material to be positioned more accurately by the means for causing the material to move transversely to the longitudinal direction of movement, positioned downstream of a preceding weighing machine.

It should be understood that when both of a pair of further adjacent parallel conveyors are adapted to form the load bearing platforms of further weighing machines, each parallel conveyor is adapted to form the load-bearing platform of one weighing machine respectively each of which weighs the material on the respective load-bearing platform, so that the weight of the whole material as well as a portion is measured.

The cutting device may be fixed or movable. When fixed, the cutting device is preferably positioned on a straight line extending beyond the position between the parallel conveyors. When movable, the cutting device is adapted to move transversely in either direction relative to the longitudinal movement of the fish or meat material on the conveyors. The movement of the cutting device may be achieved by a step motor which is actuated according to the weight recorded on the immediately preceding weighing machine by a control device which causes the cutting device to move in either direction transversely before stopping in the appropriate position to cut the meat or fish material at the correct point. Although any kind of cutting device may be used, for example, jet cutting, a circular saw is preferred. When one or more further weighing machines are present, advantageously one or more further cutting devices are present, which may be positioned downstream of a conveyor adapted to travel longitudinally and which are also adapted to travel transversely to the longitudinal direction of movement.

A further conveyor is conveniently provided immediately after the cutting device to transport the cut material away. If desired, a further weighing machine may be provided after cutting to check the final weight of the cut material.

The present invention also provides a process for the automatic cutting of meat or fish material to produce portions of a predetermined constant weight which comprises cutting a meat or fish material on a conveyor means into portions characterised in that the meat or fish material is placed onto the infeed end of a pair of adjacent parallel conveyors travelling in the same direction substantially at the same speed so that the material lies partly on each conveyor, at least part of one conveyor being adapted to form the load-bearing platform of a weighing machine which records the weight of the material advancing on the load-bearing platform, the recorded weight measurement is fed to a control device which actuates a means positioned downstream of the weighing machine to cause the material to move transversely relative to the longitudinal direction of movement of the parallel conveyors, the direction and distance of the transverse movement being determined by the weight recorded, after which the material is cut by a cutting device in a direction parallel to the longitudinal direction of movement of the parallel conveyors.

The meat or fish material is conveniently placed on the adjacent parallel conveyors manually so that the desired approximate wieght of that part of the material which will form the portion having a predetermined wieght lies substantially on the conveyor adapted to form the load-bearing platform of the weighing machine, conveniently by ensuring that the material contacts a fixed guide fitted in the appropriate position on top of this latter conveyor.

The present invention is applicable to meat and fish materials of all sizes and shapes, for example cod or salmon. The invention is particularly suitable for cutting cod tails having a weight between about 100 g to 175 g, but is also applicable for cutting fillets weighing up to 700 g.

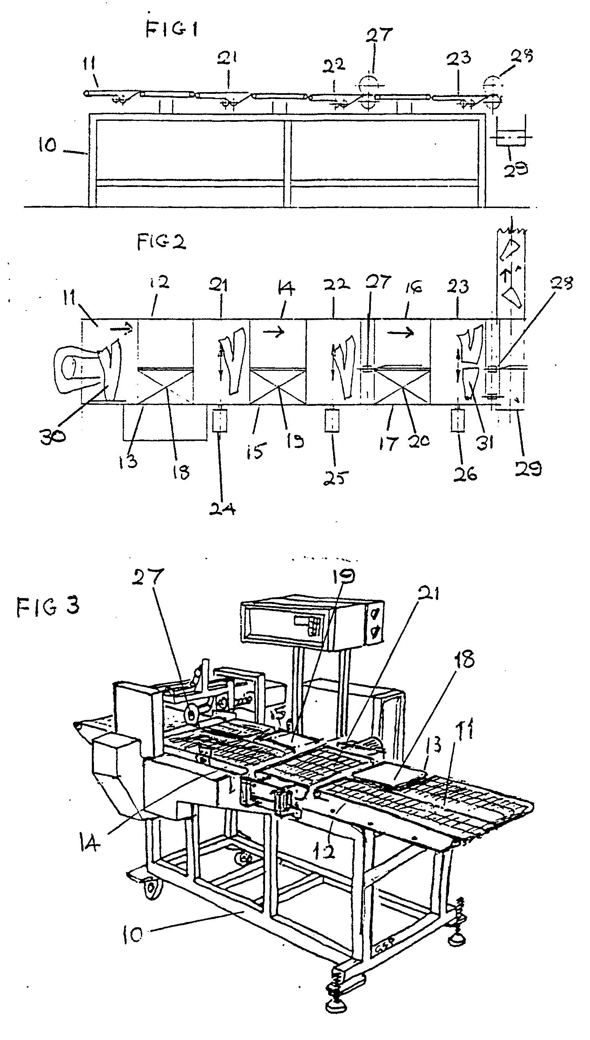

The present invention will now be illustrated by way of example with reference to the accompanying drawings in which Figure 1 represents a diagrammatic side plan view of an apparatus having fixed cutters and Figure 2 represents a diagrammatic top plan view of the apparatus of Figure 1, while Figure 3 represents a perspective view of an apparatus having a movable cutter.

Referring to the drawings, the apparatus comprises a supporting frame 10, an infeed conveyor 11, pairs of adjacent parallel conveyors 12 and 13, 14 and 15, 16 and 17 of which conveyors 13, 15 and 17 are adapted to form the load-bearing platforms of weighing machines 18,19 and 20 respectively. Upstream of each pair of adjacent parallel conveyors is a conveyor adapted to move transversely to the longitudinal direction 21, 22 and 23, by means of step-motors 24,25 and 26 respectively. A circular saw 27 is positioned downstream of conveyor 22 and another circular saw 28 is positioned downstream of conveyor 23 while an outfeed belt 29 is positioned downstream of circular saw 28.

In the operation of the apparatus illustrated in Figures 1 and 2, fillets of cod 30 are placed manually onto the infeed conveyor 11 so that approximately 120 g of the tail end lies on the infeed conveyor. This is achieved by placing the fillet so that the end of the tail contacts a fixed guiding bar (not shown) fitted above the infeed conveyor. The cod fillets 30 advance in the direction of the arrows and on reaching conveyors 12,13 the weight of the tail is recorded by weighing machine 18. This weight measurement is fed to a control device (not shown) which actuates the step-motor 24 to cause the conveyor 21 to move transversely as the cod fillet advances on it downstream. If the weight recorded is higher than the desired 120 g, the conveyor 21 moves transversely (to the left of the longitudinal movement of the fillets in Fig. 2), whereas if the weight recorded is lower than 120 g the conveyor 21 moves in the opposite direction. This enables the weight of the cod tail to approach the desired 120 g. As the cod fillet advances to conveyors 14,15, the weight of the tail is recorded by weighing machine 19. By the same procedure as described above, as the cod fillet advances downstream on conveyor 22, this conveyor moves an appropriate distance transversely (to the left or the right as shown in Fig. 2) to ensure that the weight of the cod tail is even nearer to 120 g. As the cod fillet advances it is cut by the fixed circular saw 27 to separate a cod tail 31 having a weight of very near to 120 g from the rest of the fillet. The cod tail and the rest of the fillet then advance on to conveyors 16,17 where the weight of the cod tail is checked by weighing machine 20 and by the same procedure as described previously, as the cod tail advances on conveyor 23, this conveyor moves an appropriate distance in the appropriate direction transversely to ensure that when the cod tail reaches the fixed circular saw 28, the cod tail is cut, if necessary, so that it has a weight of almost exactly 120 g. The cod tail is then transported away on the outfeed belt 29 for further processing.

In order to avoid underweight cod tails, the weight setting of the weighing machines 18 and 19 may be slightly higher than the desired nominal weight of the cod tails which means that the transversal positioning of the cod fillet will always be at the upper side of the nominal weight resulting in the fact that the weight of the cod tail cut by the circular saw 27 will be slightly overweight prior to the final weight adjustment of the cod tail by the circular saw 28.

The operation of the apparatus illustrated in Figure 3 proceeds in exactly the same way as that of the apparatus illustrated in Figures 1 and 2 until the weight of the tail is recorded by weighing machine 19. This weight measurement is fed to a control device (not shown) which actuates the step motor of the movable circular saw 27 to cause the circular saw to move transversely the appropriate distance so that as the cod tail advances, it is cut in the correct position to give the desired weight of almost exactly 120 g. The cod tail is then transported away on an outfeed belt for further processing.

## Claims

1. An apparatus for the automatic cutting of meat or fish material (30) to produce portions (31) of a predetermined constant weight which comprises a conveyor means (13) adapted to carry the meat or fish material (30), a weighing machine (18), a control device, and a cutting device (27) characterised in that the conveyor means comprises a pair of adjacent parallel covveyors (12,13) adapted to travel longitudinally in the same direction and at substantially the same speed and that one of the pair (13) of adjacent parallel conveyors is adapted to form the load-bearing platform of the weighing machine (18), there being provided means for feeding the weight measurement to the control device, the cutting device (27) being positioned downstream of the weighing machine and, positioned between the weighing machine (18) and the cutting device (27), there is provided means for causing the material (30) to move transversely relative to the longitudinal direction of movement and the cutting device (27) being adapted to cut the material parallel to the longitudinal direction of movement of the conveyors means (13).

2. An apparatus according to claim 1 characterised in that the parallel conveyors (12,13) comprise endless belts.

3. An apparatus according to claim 1 characterised in that the means for causing the material to move transversely relative to the longitudinal direction of movement is a single endless conveyor belt (21) capable of travelling longitudinally and provided with means to move transversely in either direction.

4. An apparatus according to claim 1 characterised in that the adjacent parallel conveyors (12,13) are separated by a short distance so that there is a gap of from 20 to 70 mm between them.

5. An apparatus according to claim 1 characterised in that one or more further weighing machines (19,20) are positioned successively upstream in association with one or more further pairs of adjacent parallel conveyors (14,15,16,17) one or both of each pair being adapted to form the load-bearing platform of any such further weighing machines, and one or more further means (22,23) for causing the meat or fish material to move transversely to the longitudinal direction of movement, positioned between any two successive weighing machines.

6. An apparatus according to claim 1 characterised in that the cutting device (27) is fixed or movable transversely in either direction relative to the longitudinal movement of the fish or meat material on the conveyors.

7. An apparatus according to claim 6 characterised in that the fixed cutting device (27) is positioned on a straight line extending beyond the position between the adjacent parallel conveyors (12,13,14,15).

8. A process for the automatic cutting of meat or fish material (30) to produce portions (31) of a predetermined constant weight which comprises cutting a meat or fish material (30) on a conveyor means into portions characterised in that the meat or fish material is placed onto the infeed end of a pair of adjacent parallel conveyors (12,13) travelling in the same direction substantially at the same speed so that the material (30) lies partly on each conveyor, at least part of one conveyor (13) being adapted to form the load-bearing platform of a weighing machine (18) which records the weight of the material advancing on the load-bearing platform, the recorded weight measurement is fed to a control device which actuates a means (21) positioned downstream of the weighing machine to cause the material (30) to move transversely relative to the longitudinal direction of movement of the parallel conveyors (12,13), the direction and distance of the transverse movement being determined by the weight recorded, after which the material is cut by a cutting device (27) in a direction parallel to the longitudinal direction of movement of the parallel conveyors (12,13).

9. A process according to claim 8 characterised in that the meat or fish material (30) is placed on the adjacent parallel conveyors (12,13) manually so that the desired approximate weight of that part of the material which will form the portion (31) having a predetermined weight lies substantially on the conveyor (13) adapted to form the load-bearing platform of the weighing machine (18).

10. A process according to claim 9 characterised in that it is ensured that the material contacts a fixed guide fitted in the appropriate position on top of the conveyor (13) adapted to form the load-bearing platform of the weighing machine (18).

## Revendications

1. Appareil pour la coupe automatique de viande ou de poisson (30) afin de produire des portions (31) d'un poids constant prédéterminé, qui comporte des moyens transporteurs (13) conçus pour porter la viande ou le poisson (30), une machine de pesage (18), un dispositif de commande et un dispositif de coupe (27), caractérisé en ce que les moyens transporteurs comprennent deux transporteurs parallèles adjacents (12, 13) conçus pour se déplacer longitudinalement dans le même sens et sensiblement à la même vitesse, et en ce que l'un (13) des deux transporteurs parallèles adjacents est conçu pour former la plate-forme de charge de la machine de pesage (18), des moyens étant prévus pour appliquer la mesure de poids au dispositif de commande, le dispositif de coupe (27) étant placé en aval de la machine de pesage et des moyens, placés entre la machine de pesage (18) et le dispositif de coupe (27), étant prévus pour amener la matière (30) à se déplacer tansversalement par rapport à la direction longitudinale du mouvement, le dispositif de coupe (27) étant conçu pour couper la matière parallèlement à la direction longitudinale du mouvement des moyens transporteurs (13).

2. Appareil selon la revendication 1, caractérisé en ce que les transporteurs parallèles (12, 13) comprennent des bandes sans fin.

3. Appareil selon la revendication 1, caractérisé en ce que les moyens destinés à amener la matière à se déplacer transversalement par rapport à la direction longitudinale du mouvement comprennent une bande transporteuse sans fin et unique (21) capable de se déplacer longitudinalement et pourvue de moyens destinés à se déplacer transversalement dans un sens comme dans l'autre.

4. Appareil selon la revendication 1, caractérisé en ce que les transporteurs parallèles adjacents (12, 13) sont séparés d'une courte distance afin qu'il existe un intervalle de 20 à 70 mm entre eux.

5. Appareil selon la revendication 1, caractérisé en ce qu'une ou plusieurs autres machines de pesage (19, 20) sont placées successivement en amont, en association avec une ou plusieurs paires de transporteurs parallèles adjacents (14, 15, 16, 17), un ou deux des transporteurs de chaque paire étant conçus pour former la plate-forme de charge de ces autres machines de pesage, un ou plusieurs autres moyens (22, 23) amenant la viande ou le poisson à se déplacer transversalement à la direction longitudinale du mouvement et étant intercalés entre les machines de pesage successives.

6. Appareil selon la revendication 1, caractérisé en ce que le dispositif de coupe (27) est fixe ou mobile transversalement dans un sens comme dans l'autre par rapport au mouvement longitudinal du poisson ou de la viande sur les transporteurs.

7. Appareil selon la revendication 6, caractérisé en ce que le dispositif fixe de coupe (27) est placé sur une ligne droite s'étendant au-delà de la position entre les transporteurs parallèles adjacents (12, 13, 14, 15).

8. procédé pour la coupe automatique de viande ou de poisson (30) pour produire des portions (31) d'un poids constant prédéterminé, qui consiste à couper en portions de la viande ou du poisson (30) sur des moyens transporteurs, caractérisé en ce que la viande ou le poisson est placé sur l'extrémité de chargement de deux transporteurs parallèles adjacents (12, 13) se déplaçant dans le même sens sensiblement à la même vitesse afin que la matière (30) s'étende partiellement sur chaque transporteur, au moins une partie d'un transporteur (13) étant conçue pour former la plate-forme de charge d'une machine de pesage (18) qui enregistre le poids de la matière avançant sur la plate-forme de charge, la mesure de poids enregistrée étant appliquée à un dispositif de commande qui actionne un moyen (21) placé en aval de la machine de pesage pour amener la matière (30) à se déplacer transversalement par rapport à la direction longitudinale du mouvement des transporteurs parallèles (12, 13), le sens et la distance du mouvement transversal étant déterminés par le poids enregistré, après quoi la matière est coupée par un dispositif de coupe (27) dans une direction parallèle à la direction longitudinale du mouvement des transporteurs parallèles (12, 13).

9. procédé selon la revendication 8, caractérisé en ce que la viande ou le poisson (30) est placé à la main sur les transporteurs parallèles adjacents (12, 13) afin que le poids approximatif souhaité de la partie de la matière qui formera la portion (31) d'un poids prédéterminé s'étende sensiblement sur le transporteur (13) conçu pour former la plate-forme de charge de la machine de pesage (18).

10. Procédé selon la revendication 9, caractérisé en ce que l'on s'assure que la matière soit en contact avec un guide fixe monté dans la position appropriée au-dessus du transporteur (13) destiné à former la plate-forme de charge de la machine de pesage (18).

## Ansprüche

1. Vorrichtung zum automatischen Schneiden eines Fleisch- oder Fischmaterials (30) zur Herstellung von Portionen (31) mit einem vorgegebenen konstanten Gewicht, die eine Fördereinrichtung (13) zum Transportieren des Fleisch- oder Fischmaterials (30), eine Wägemaschine (18), eine Steuervorrichtung und eine Schneidvorrichtung (27) umfaßt, dadurch gekennzeichnet, daß die Fördereinrichtung ein Paar von benachbarten parallelen Förderern (12, 13) umfaßt, die so ausgebildet sind, daß sie sich mit im wesentlichen der gleichen Geschwindigkeit in die gleiche Längsrichtung bewegen und daß ein Förderer (13) des Paars von benachbarten parallelen Förderern so ausgebildet ist, daß er die Wägebrücke der Wägemaschine (18) bildet, daß eine Einrichtung zur Einspeisung der Gewichtsmessung in die Steuer-vorrichtung vorgesehen ist, wobei die Schneidvorrichtung (27) stromab der Wägemaschine angeordnet ist und daß zwischen der Wägemaschine (18) und der Schneidvorrichtung (27) eine Einrichtung zur Bewegung des Materials (30) quer bezüglich der Längsbewegungsrichtung vorgesehen ist und die Schneidvorrichtung (27) so ausgebildet ist, daß sie das Material parallel zur Längsbewegungsrichtung der Fördereinrichtung (13) schneidet.

2. Vorrichtung nach Anspruch 1, dadurch gekennzeichnet, daß die parallelen Förderer (12, 13) Endlosbänder aufweisen.

3. Vorrichtung nach Anspruch 1, dadurch gekennzeichnet, daß die Einrichtung zur Bewegung des Materials quer bezüglich der Längsbewegungsrichtung ein einziges Endlosförderband (21) ist, das in Längsrichtung läuft und mit einer Einrichtung versehen ist, mittels der es sich in Querrichtung in beide Richtungen bewegen kann.

4. Vorrichtung nach Anspruch 1, dadurch gekennzeichnet, daß die benachbarten parallelen Förderer (12, 13) durch einen kleinen Abstand voneinander getrennt ist, so daß ein Spalt von 20 bis 70 mm zwischen ihnen gebildet wird.

5. Vorrichtung nach Anspruch 1, dadurch gekennzeichnet, daß eine oder mehrere weitere Wägemaschinen (19, 20) nacheinander stromauf in Zuordnung zu einem oder mehreren weiteren Paaren von benachbarten parallelen Förderern (14, 15, 16, 17) angeordnet sind, wobei einer oder beide eines jeden Paares so ausgebildet sind, daß sie die Wägebrücke einer jeden derartigen weiteren Wägemaschine bilden, und daß eine oder mehrere weitere Einrichtungen (22, 23) zur Bewegung des Fleisch- oder Fischmaterials quer zu der Längsbewegungsrichtung vorgesehen sind, die zwischen jeweils zwei aufeinanderfolgenden Wägemaschinen angeordnet sind.

6. Vorrichtung nach Anspruch 1, dadurch gekennzeichnet, daß die Schneidvorrichtung (27) feststehend ist oder quer zu der Längsbewegungsrichtung des Fisch- oder Fleischmaterials auf den Förderern in beliebiger Richtung beweglich ist.

7. Vorrichtung nach Anspruch 6, dadurch gekennzeichnet, daß die feststehende Schneidvorrichtung (27) auf einer geraden Linie angeordnet ist, die sich bis hinter den Ort zwischen den benachbarten parallelen Förderern (12, 13, 14, 15) erstreckt.

8. Verfahren zum automatischen Schneiden eines Fleischoder Fischmaterials (30) zur Herstellung von Portionen (31) mit einem vorgegebenen konstanten Gewicht, das das Schneiden eines Fleisch- oder Fischmaterials (30) auf einer Fördereinrichtung zu Portionen umfaßt, dadurch gekennzeichnet, daß das Fleisch- oder Fischmaterial auf das Zuführende eines Paars von benachbarten parallelen Förderern (12, 13) aufgegeben wird, die mit im wesentlichen gleicher Geschwindigkeit in die gleiche Richtung laufen, so daß das Material (30) teilweise auf einem jeden der Förderer aufliegt, wobei wenigstens ein Teil eines Förderers (13) so ausgebildet ist, daß er die Wägebrücke einer Wägemaschine (18) bildet, die das Gewicht des Materials aufzeichnet, das sich auf der Wägebrücke vorwärtsbewegt, wobei die aufgezeichnete Gewichtsmessung einer Steuervorrichtung zugeführt wird, die eine Einrichtung (21) in Betrieb setzt, die stromab der Wägemaschine angeordnet ist und eine Querbewegung des Materials (30) relativ zu der Längsbewegungsrichtung der parallelen Förderer (12, 13) bewirkt, wobei die Richtung und die Weglänge der Querbewegung durch das aufgezeichnete Gewicht bestimmt werden, wonach das Material von einer Schneidvorrichtung (27) in einer Richtung parallel zu der Längsbewegungsrichtung der parallelen Förderer (12, 13) geschnitten wird.

9. Verfahren nach Anspruch 8, dadurch gekennzeichnet, daß das Fleisch- oder Fischmaterial (30) manuell auf die benachbarten parallelen Förderer (12, 13) so aufgelegt wird, daß das gewünschte näherungsweise Gewicht des Teils des Materials, der die Portion (31) mit einem vorgegebenen Gewicht bilden wird, im wesentlichen auf dem Förderer (13) aufliegt, der so ausgebildet ist, daß er die Wägebrücke der Wägemaschine (18) bildet.

10. Verfahren nach Anspruch 9, dadurch gekennzeichnet, daß gewährleistet wird, daß das Material eine feststehende Führung berührt, die in einer geeigneten Position über dem Förderer (13) angebracht ist, der so ausgebildet ist, daß er die Wägebrücke der Wägemaschine (18) bildet.

FIG1

FIG2

FIG 3